# NEUE EUROPÄISCHE PATENTSCHRIFT

(11) **EP 2 297 843 B2**
(45) Veröffentlichungstag und Bekanntmachung des Hinweises auf die Entscheidung über den Einspruch: **19.10.2016**
(45) Hinweis auf die Patenterteilung: 08.08.2012
(21) Anmeldenummer: 09776597.8
(22) Anmeldetag: 09.05.2009
(51) Int. Cl.: H02P 9/30, H02K 19/38, G08C 17/04

(54) **FREMDERREGTE ELEKTRISCHE SYNCHRONMASCHINE**
SEPARATELY EXCITED ELECTRICAL SYNCHRONOUS MACHINE
MACHINE ÉLECTRIQUE SYNCHRONE À EXCITATION EXTÉRIEURE

(30) Priorität: 09.07.2008 DE 102008032210
(43) Veröffentlichungstag der Anmeldung: 23.03.2011
(73) Patentinhaber: SEW-EURODRIVE GmbH & Co. KG, 76646 Bruchsal (DE)
(72) Erfinder: SCHMIDT, Josef, 76676 Graben-Neudorf (DE); HAUCK, Matthias, 68723 Schwetzingen (DE); LEWANDOWSKI, Marek, D-71272 Renningen (DE)
(86) Internationale Anmeldenummer: PCT/EP2009/003306
(87) Internationale Veröffentlichungsnummer: WO 2010/003474

(56) Entgegenhaltungen:
- EP-A- 1 757 480
- CN-A- 1 835 351
- US-A1- 2006 252 370
- US-A1- 2007 222 220

## Beschreibung

Die Erfindung betrifft eine fremderregte elektrische Synchronmaschine.

Bekannt sind Synchronmaschinen oder Synchronmotoren, bei denen auf ihrem Rotor Dauermagnete vorgesehen sind, insbesondere in Umfangsrichtung abwechselnd orientiert radial magnetisierte Dauermagnete. Der Stator solcher Maschinen ist zur Erzeugung eines Drehfeldes vorgesehen.

Aus der US 2007/0222220 A1 ist eine fremderregte Synchronmaschine bekannt, bei der das drehende Teil induktiv versorgt ist.

Aus der CN 1835351 A ist ebenfalls eine fremderregte Synchronmaschine bekannt, bei der der ans drehende Teil induktiv transformatorisch übertragene Strom einem Diodengleichrichter zugeführt wird und der gleichgerichtete Strom einer Feldspule zugeführt wird.

Aus der EP 1 757 480 A1 ist ein Radantrieb bekannt, der einen Transponder aufweist.

Aus der US 2006/0252370 A1 ist eine Leistungs- und Datenübertragung zwischen induktiv gekoppelten Kommunikationsteilnehmern bekannt.

Aus der WO 01/52391 A1 ist ein Motor mit supraleitenden Wicklungen bekannt.

Der Erfindung liegt daher die Aufgabe zugrunde, verbesserte Regeleigenschaften zu ermöglichen bei einer Synchronmaschine.

Erfindungsgemäß wird die Aufgabe bei der Synchronmaschine nach den in Anspruch 1 angegebenen Merkmalen gelöst.

Wichtige Merkmale der Erfindung bei der fremderregten elektrischen Synchronmaschine sind, dass am Rotor Spulenwicklungen, insbesondere als Erregerspulen, angeordnet sind,
wobei die elektrische Versorgung der Spulenwicklungen mittels eines induktiven Drehübertragers erfolgt, dessen Sekundärwicklung mit dem Rotor verbunden ist und dessen induktiv an die Sekundärwicklung gekoppelte Primärwicklung stationär angeordnet ist, insbesondere mit dem Stator der Synchronmaschine verbunden ist, Fremderregte elektrische Synchronmaschine,
wobei ein Sensor zur Erfassung des durch die Spulenwicklungen fließenden Stromes und ein Sensor zur Erfassung der Rotortemperatur auf dem Rotor angeordnet sind/ist,
wobei auf dem Rotor eine Reglereinheit angeordnet ist, der die Sensorsignale zugeleitet werden und die mittels auf dem Rotor angeordneten Leistungsschaltern eines aktiven Gleichrichters den durch die Spulenwicklungen fließenden Stromes auf einen Sollwert hinregelt,
wobei zur resonanten Übertragung der Energie über den Luftspalt des Drehübertragers der Sekundärwicklung eine derartige Kapazität in Reihe oder parallel beschaltet ist, dass die zugehörige Resonanzfrequenz im Wesentlichen der Frequenz des in die Primärwicklung eingespeisten Stromes entspricht,
- wobei der aktive Gleichrichter mit der Sekundärwicklung verbunden ist zur Versorgung der Spulenwicklung mit unipolarem Strom, insbesondere Gleichstrom, oder zur Versorgung der Spulenwicklung mit einem Wechselstrom, dessen zeitlicher Mittelwert nicht verschwindet, insbesondere wobei der Mittelwert über eine zeitliche Periode des Wechselstroms gebildet ist,
wobei die Synchronmaschine eine Statorwicklung und den Rotor umfasst, an dem die Spulenwicklungen in Umfangsrichtung derart angeordnet und bestromt sind, dass radial orientierte Magnetfelder erzeugbar sind, die in Umfangsrichtung abwechselnd orientiert sind.

Von Vorteil ist dabei, dass eine verschleißfreie Versorgung der Erregerwicklungen ermöglicht ist. Außerdem ist auf diese Weise eine Steuerung oder sogar Regelung des Erregerstromes von der Primärseite aus ermöglicht. Alternativ ist auch eine Steuerung oder sogar Regelung des Erregerstromes auf der Sekundärseite, also auf dem drehenden Teil, ermöglicht.

Vorteilig ist auch, dass sehr hohe Drehzahlen bis 20 000 oder gar 100 000 Umdrehungen pro Minute ermöglicht sind, insbesondere bei begrenzter Versorgungsspannung für die Endstufe. Ein direktes Versorgen der Endstufe aus einer Batterie ist ermöglicht.

Außerdem ist die Erregung sehr schnell abschaltbar.

Weiter ist von Vorteil, dass das Abschalten der Erregung ausführbar ist und somit Leerlaufverluste reduzierbar sind.

Weiterer Vorteil ist, dass die erfindungsgemäße Maschine primär durch eine Veränderung der Erregung regelbar ist und somit trotz konstantem Statorstrom, der vorteilig bei der elektrischen und thermischen Auslegung der Maschine wirkt, in einem weiten Drehzahlbereich die Maschine mit einem näherungsweise unveränderten Effektivwert der Statorspannung und damit mit gleicher Leistung betreibbar ist. Dies ist besonders wichtig für Systeme, bei denen die Optimierung der Leistungsaufnahme und/oder -abgabe Ziel ist.

Erfindungsgemäß ist auf dem Rotor eine Reglereinheit angeordnet, der die Sensorsignale zugeleitet werden. Von Vorteil ist dabei, dass eine möglichst hohe Dynamik erreichbar ist, da die Reglereinheit direkt am Rotor sitzt und nicht indirekt über den Drehübertrager arbeitet.

Weiter ist erfindungsgemäß ein Sensor zur Erfassung von des durch die Spulenwicklungen fließenden Stromes und ein Sensor zur Erfassung der Rotortemperatur auf dem Rotor vorgesehen. Von Vorteil ist dabei, dass eine Regelung verbessert ausführbar ist und insbesondere bei Berücksichtigung der Rotortemperatur sogar Änderungen von Streckengrößenwerten berücksichtigbar sind.

Erfindungsgemäß ist der Sekundärwicklung eine derartige Kapazität in Reihe oder parallel beschaltet, dass die zugehörige Resonanzfrequenz im Wesentlichen der Frequenz des in die Primärwicklung eingespeisten Stromes entspricht. Von Vorteil ist dabei, dass ein hoher Wirkungsgrad auch bei Abstandsschwankungen erreichbar ist, da die Abstandsempfindlichkeit des Wirkungsgrades bei der resonanten Übertragung der Energie über den Luftspalt des Drehübertragers hinweg verringert ist.

Erfindungsgemäß ist ein aktiver Gleichrichter mit der Sekundärwicklung verbunden zur Versorgung der Spulenwicklung mit unipolarem Strom, insbesondere Gleichstrom. Von Vorteil ist dabei, dass bei Ausführung eines passiven Gleichrichters das Trägheitsmoment des Rotors gering haltbar ist und trotzdem der durch die Spulenwicklungen fließende Strom steuerbar ist, insbesondere indem der Primärstrom gesteuert oder auf einen Sollwert hin geregelt wird. Von Vorteil bei Ausführung eines steuerbaren Gleichrichters ist, dass der Strom durch die Spulenwicklungen direkt steuerbar oder regelbar ist und somit eine hohe Dynamik bei der Regelung erreichbar ist, obwohl das Trägheitsmoment des Rotors erhöht ist durch die steuerbaren Bauelemente.

Erfindungsgemäß ist ein Leistungsschalter auf dem Rotor angeordnet, insbesondere zum Regeln des durch die Spulenwicklungen fließenden Stromes auf einen Sollwert hin. Von Vorteil ist dabei, dass die Verluste möglichst gering und die Regeldynamik möglichst hoch ist. Die Schaltverluste fallen direkt bei dem drehenden Teil an.

Erfindungsgemäß umfasst die Synchronmaschine eine Statorwicklung und den Rotor, an dem die Spulenwicklungen in Umfangsrichtung derart angeordnet und bestromt sind, dass radial orientierte Magnetfelder erzeugbar sind, die in Umfangsrichtung abwechselnd orientiert sind. Von Vorteil ist dabei, dass das Erregerfeld steuerbar ist.

Bei einer vorteilhaften Ausgestaltung sind Mittel zur De- und Aufmodulation höher frequenter Stromanteile vorgesehen, insbesondere auf dem Rotor. Von Vorteil ist dabei, dass ohne zusätzlichen Verdrahtungsaufwand eine sichere störungsarme Datenübertragung zwischen drehendem und stationärem Teil ermöglicht ist.

Bei einer vorteilhaften Ausgestaltung ist das Drehmoment regelbar oder steuerbar bei konstanter Drehzahl.

Bei einer vorteilhaften Ausgestaltung weisen der Rotor der Synchronmaschine und die mit ihm verbundenen angetriebenen und/oder antreibenden drehbar gelagerten Teile ein derart hohes Trägheitsmoment auf, dass das Drehmoment schneller als die Drehzahl veränderbar ist, insbesondere mindestens mit einer zehnmal schnelleren Änderungsgeschwindigkeit. Von Vorteil ist dabei, dass das Drehmoment sehr schnell veränderbar ist und somit ein beispielsweise von der Synchronmaschine erzeugtes Drehmoment auf das Abtriebsmoment einer Verbrennungskraftmaschine aufaddierbar ist, wobei die Drehzahl der Verbrennungskraftmaschine eine hohe Trägheit aufweist und somit auf der Zeitskala der Drehmomentänderung konstant erscheint. Statt einer Verbrennungskraftmaschine ist auch eine andere Vorrichtung mit großem Trägheitsmoment, wie beispielsweise Schwungmasse, verwendbar.

Weitere Vorteile ergeben sich aus den Unteransprüchen.

Die Erfindung wird nun anhand von Abbildungen näher erläutert:

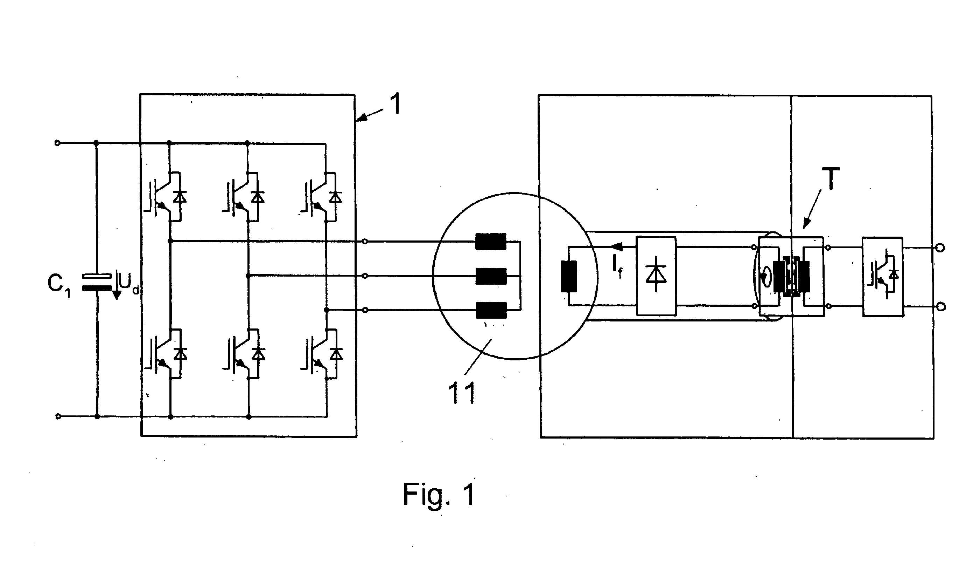

In der Figur 1 ist eine nicht zu der Erfindung gehörige Vorrichtung schematisch skizziert.

Aus einer am Glättungskondensator C_1 anliegenden unipolaren Spannung wird eine Endstufe 1 versorgt, die drei Halbbrücken umfasst, welche jeweils eine Reihenschaltung von Leistungsschaltern aufweist. Aus der Endstufe 1 werden die Statorwicklungen des Synchronmotors versorgt. Jedem Leistungsschalter ist auch eine Diode parallel zugeschaltet. Die Endstufe ist in der Lage Energie vom Kondensator zu den Statorwicklungen und von den Statorwicklungen zum Kondensator hin zu transportieren.

Am Synchronmotor ist ein Winkelsensor zur Erfassung der Winkellage des Rotors des Synchronmotors vorgesehen. Die Schalter der Endstufe 1 werden abhängig, insbesondere synchron, zur erfassten Winkellage getaktet. Vorzugsweise wird eine Blockkommutierung ausgeführt.

Auf dem Rotor des Synchronmotors sind anstatt von Permanentmagneten Spulenwicklungen vorgesehen, die ein im Wesentlichen radial gerichtetes Feld erzeugen. Der wesentliche Unterschied zu einem Synchronmotor mit Permanentmagneten ist hierbei, dass das von den Spulenwicklungen erzeugte Feld steuerbar ist.

Die Versorgung der Spulenwicklungen erfolgt aus der Sekundärspule eines induktiven Drehübertragers, der auch eine Primärwicklung umfasst, die mit der Sekundärspule induktiv gekoppelt ist, wobei aber die Sekundärspule am Rotor befestigt ist, also drehbar gelagert ist gegenüber der stationär angeordneten Primärspule. Elektrotechnisch entspricht der Drehübertrager somit einem einfachen Transformator T. Die im Vergleich zur Lichtgeschwindigkeit geringe Drehgeschwindigkeit bewirkt, dass keine Abhängigkeit der übertragenen Leistung von der Drehgeschwindigkeit auftritt. Somit ist der Wirkungsgrad des Drehübertragers für sich genommen bei Stillstand und bei Drehzahlen bis 100 000 Umdrehungen pro Minute im Wesentlichen gleich.

Vorzugsweise wird primärseitig ein mittelfrequenter Strom eingeprägt, der eine Frequenz zwischen 10 und 500 kHz aufweist, insbesondere 10 - 30 kHz. Der Sekundärspule ist dann eine Kapazität in Reihe oder parallel beschaltet, die derart dimensioniert ist, dass die zugehörige Resonanzfrequenz im Wesentlichen der Mittelfrequenz des primärseitigen Stromes entspricht.

Auf dem Rotor ist auch eine Steuerelektronik 2 mit der Sekundärspule verbunden. Mit der Primärspule ist eine Steuerelektronik 3 verbunden. Die Steuerelektronik 2 und die Steuerelektronik 3 umfassen jeweils Mittel zur Aufmodulation und Demodulation höher frequenter Stromanteile. Somit sind über den induktiven Drehübertrager auch Informationen bidirektional übertragbar. Insbesondere sind also auch auf dem drehenden Teil erfasste Sensorsignale oder entsprechende Informationen an das stationäre Teil berührungslos übertragbar.

Am Rotor, also dem drehenden Teil des Elektromotors M, ist auch ein Sensor S angeordnet, der zumindest den für die Spulenwicklungen des Rotors vorgesehenen Strom erfasst. Dabei werden die Spulenwicklungen mit einer unipolaren Spannung betrieben, die aus einem steuerbaren Leistungssteller 5 erzeugt wird, der von der Sekundärspule gespeist wird. Auch primärseitig ist zur Versorgung der Primärspule des induktiven Drehübertragers eine Leistungsverstärkung 4 vorgesehen, die steuerbar ist.

Auf diese Weise ist der an die Spulenwicklungen zugeführte Strom steuerbar oder bei Berücksichtigung der von dem Sensor S erfassten Stromwerte sogar regelbar. Dabei ist die Regeleinheit in der Steuerelektronik 2 und/oder 3 integriert vorsehbar.

Die Statorwicklungen des Elektromotors M sind als Drehstromwicklung nach Stand der Technik ausführbar. In jedem Fall sind sie derart ausgeführt, dass ein Drehfeld im Bereich des Rotors erzeugbar ist.

Die Drehzahl des Motors kann mehr als 20 000 Umdrehungen, insbesondere bis zu 100 000 Umdrehungen pro Minute betragen. Es sind sogar höhere Drehzahlen vorteiligerweise betreibbar.

Erfindungsgemäß wird der Motor derart betrieben und/oder geregelt, dass die Drehzahl im Wesentlichen konstant gehalten wird und das Drehmoment auf einen Sollwert hin geregelt wird. Das Konstanthalten der Drehzahl wird durch die mit dem Rotor verbundene anzutreibende Last bewirkt. Diese Last ist beispielsweise mit einem hohen Trägheitsmoment ausgeführt und/oder als von einem Verbrennungsmotor angetriebene Welle.

Die Endstufe wird mit Blocktaktung betrieben, also entspricht die Frequenz der blockförmigen motorseitigen Ausgangsspannung der elektrischen Statorfrequenz und der zugehörige Effektivwert ist direkt proportional zur Spannung am Kondensator C_1.

Da die Winkelstellung des Rotors mittels eines Winkelsensors erfasst ist, werden die Schalter in einfacher Weise abhängig vom jeweiligen Winkelwert geschaltet.

Als Istwert ist statt des Drehmoments der Motorstrom erfassbar, insbesondere unter zusätzlicher Erfassung des durch den Sensor S erfassten Stromes. Die den Stator des Motors versorgende blockkommutierte Spannung ist ebenfalls berücksichtigbar.

Als Stellgröße ist die am Drehübertrager primärseitig eingespeiste Spannung verwendbar.

Auf diese Weise ist also eine Drehmomentenregelung realisierbar, wobei der Drehmomentwert sehr schnell veränderbar ist. Denn auch wenn die am Stator anliegende Spannung und auch der Statorstrom nur langsam oder überhaupt nicht verändert werden wie auch die vorgegebene Drehzahl, ist doch eine Veränderung des in den Spulengruppen des Rotors fließende Strom schnell und stark veränderbar. Die Reaktionszeit des Systems ist also sehr kurz.

Die Regelungseinheit ist in der Steuerelektronik 2 integrierbar, wobei die vom Sensor S erfassten Werte ebenfalls an diese Regelungseinheit übertragen werden. Vorzugsweise ist die Drehmomentenregelung als eine einem Stromregler überlagerte Regelung vorgesehen, wobei der Stromregler den Erregerstrom auf der drehenden Rotorwelle oder alternativ den Statorstrom auf einen Sollwert hin regelt.

Die Zwischenkreisspannung, aus der die die steuerbaren Leistungsschalter 5 umfassende Endstufe versorgt wird, ist vorzugsweise konstant gehalten.

Nicht in der Figur dargestellt ist ein Sensor zur Erfassung des Statorstroms und ein Sensor zur Erfassung der Zwischenkreisspannung, deren erfasste Messwerte ebenfalls der Regelungseinheit zugeführt werden.

Die Entregung der Erregerspulen, also der Spulenwicklungen, erfolgt über Widerstände, denen von Steuerschaltelementen der zugehörige Strom zuführbar ist.

Bei weiteren Ausführungsbeispielen ist auch eine Umpolung der Polarität der unipolaren Spannung steuerbar. Insbesondere im generatorischen Betrieb ist somit ein aktiver Gleichrichter vorteilig verwendbar auf der drehenden Rotorwelle.

Bei einem weiteren Ausführungsbeispiel wird statt der in Figur 1 gezeigten dreiphasigen Ausführung der Endstufe und des Elektromotors eine höherphasige Endstufe ausgeführt. Beispielsweise ist auch eine sechsphasige Ausführung der Endstufe und des Elektromotors vorteilhaft vorsehbar.

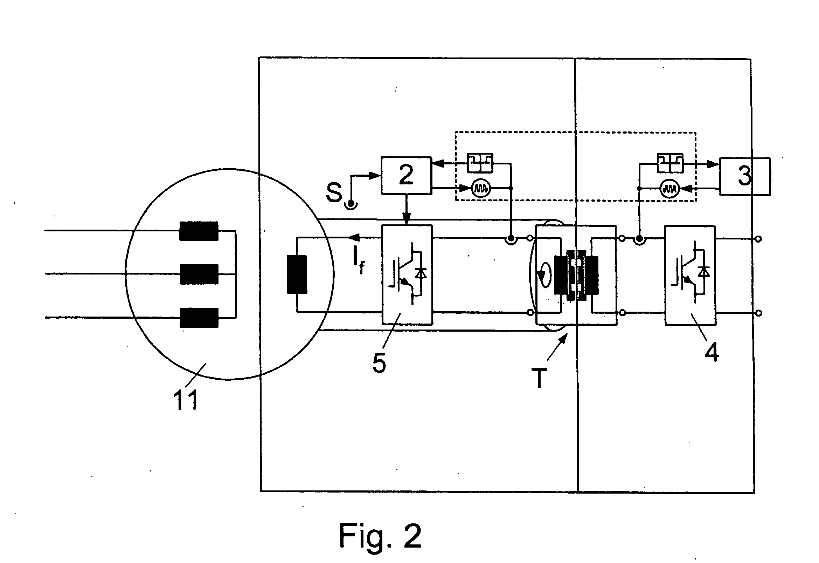

Bei dem erfindungsgemäßen Ausführungsbeispiel gemäß Figur 2 ist sekundärseitig, also auf der drehenden Rotorwelle, ein Stromregler angeordnet, der mit einem Sensor zur Erfassung des durch die Spulenwicklungen fließenden Stromes verbunden ist. Somit ist dieser erfasste Stromwert mittels eines aktiven Gleichrichter, also eines mit steuerbaren Halbleiterschaltern ausgeführten Gleichrichters, auf den gewünschten Sollwert hin regelbar, wobei der Sollwert mittels berührungsloser Datenübertragung, vorzugsweise durch Aufmodulation höher frequenter Stromanteile, über den Drehübertrager übertragen wird. Zwar erhöhen die für den Stromregler und Sensor notwendigen elektronischen Bauelemente das Trägheitsmoment und ermöglichen aber eine Regelung des Erregerstroms und somit auch eine Drehmomentregelung. Mittels der Regelung ist ein besonders genauen Erreichen des Sollwertes ausführbar.

Durch die direkte Beeinflussung des Erregerstroms wird der Sollwert vom Erregerstrom schnell erreicht und die Drehmomentwelligkeit ist gering haltbar.

Somit verringert zwar das erhöhte Trägheitsmoment die Dynamik des gesamten Systems, jedoch ist überraschenderweise insgesamt mittels der direkten Beeinflussung eine höhere Schnelligkeit bei der Drehmomentregelung erreichbar. Denn der auf dem Rotor geregelte Strom bestimmt wesentlich das Drehmoment des Elektromotors.

Bei einem weiteren erfindungsgemäßen Ausführungsbeispiel wird nicht nur der durch die Spulenwicklungen fließende Strom sondern auch die Rotortemperatur erfasst. Somit sind sogar aktuelle Regelstreckenparameter bekannt und die Regelung noch weiter verbesserbar.

Bei einem weiteren erfindungsgemäßen Ausführungsbeispiel wird auch das Drehmoment des Rotors erfasst, insbesondere auf der drehenden Rotorwelle, und bei der Regelung berücksichtigt und die Regelung verbesserbar.

Bei weiteren erfindungsgemäßen Ausführungsbeispielen sind die Informationen nur unidirektional übertragbar, also von der Primärseite zur Sekundärseite oder umgekehrt. Somit ist Gewicht auf dem drehenden Teil einsparbar, wo beispielsweise nur die Sensorsignale als Information zur Primärseite hin übertragen werden.

Bei weiteren erfindungsgemäßen Ausführungsbeispielen wird als am Glättungskondensator C_1 anliegende unipolare Spannung eine begrenzte oder festvorgegebene Spannungsquelle, wie beispielsweise Batterie, verwendet.

### Bezugszeichenliste

- 1: Endstufe
- 2: Steuerelektronik
- 3: Steuerelektronik
- 4: Leistungsverstärkung
- 5: steuerbarer Leistungssteller

- C_1: Glättungskondensator
- M: Elektromotor
- S: Sensor
- T: Transformator

## Patentansprüche

1. Fremderregte elektrische Synchronmaschine,
wobei am Rotor Spulenwicklungen, insbesondere als Erregerspulen, angeordnet sind,
und die elektrische Versorgung der Spulenwicklungen mittels eines induktiven Drehübertragers erfolgt, dessen Sekundärwicklung mit dem Rotor verbunden ist und dessen induktiv an die Sekundärwicklung gekoppelte Primärwicklung stationär angeordnet ist, insbesondere mit dem Stator der Synchronmaschine verbunden ist,
**dadurch gekennzeichnet, dass**
ein Sensor (S) zur Erfassung des durch die Spulenwicklungen fließenden Stromes und ein Sensor (S) zur Erfassung der Rotortemperatur auf dem Rotor angeordnet sind/ist,
wobei auf dem Rotor eine Reglereinheit angeordnet ist, der die Sensorsignale zugeleitet werden und die mittels auf dem Rotor angeordneten Leistungsschaltern eines aktiven Gleichrichters den durch die Spulenwicklungen fließenden Stromes auf einen Sollwert hinregelt,
wobei zur resonanten Übertragung der Energie über den Luftspalt des Drehübertragers der Sekundärwicklung eine derartige Kapazität in Reihe oder parallel beschaltet ist, dass die zugehörige Resonanzfrequenz im Wesentlichen der Frequenz des in die Primärwicklung eingespeisten Stromes entspricht,
- wobei der aktive Gleichrichter mit der Sekundärwicklung verbunden ist zur Versorgung der Spulenwicklung mit unipolarem Strom, insbesondere Gleichstrom, oder zur Versorgung der Spulenwicklung mit einem Wechselstrom, dessen zeitlicher Mittelwert nicht verschwindet, insbesondere wobei der Mittelwert über eine zeitliche Periode des Wechselstroms gebildet ist,
wobei die Synchronmaschine eine Statorwicklung und den Rotor umfasst, an dem die Spulenwicklungen in Umfangsrichtung derart angeordnet und bestromt sind, dass radial orientierte Magnetfelder erzeugbar sind, die in Umfangsrichtung abwechselnd orientiert sind.

2. Synchronmaschine nach Anspruch 1,
**dadurch gekennzeichnet, dass**
Mittel zur De- und Aufmodulation zusätzlicher Signalstromanteile, insbesondere höher frequenter Stromanteile, derart vorgesehen sind, insbesondere auf dem Rotor, dass somit über den induktiven Drehübertrager auch Informationen bidirektional übertragbar sind.

3. Synchronmaschine nach mindestens einem der vorangegangenen Ansprüche,
**dadurch gekennzeichnet, dass**
der Rotor der Synchronmaschine und die mit ihm verbundenen angetriebenen und/oder antreibenden drehbar gelagerten Teile einen Sensor (S) aufweisen, insbesondere derart, dass das Drehmoment schneller als die Drehzahl veränderbar ist, insbesondere mindestens mit einer zehnmal schnelleren Änderungsgeschwindigkeit.

## Claims

1. Separately excited electrical synchronous machine, coil windings, in particular in the form of excitation coils, being arranged on the rotor, and the electrical supply of the coil windings being achieved with the aid of an inductive rotary transmitter, whose secondary winding is connected to the rotor and whose primary winding, which is inductively coupled to the secondary winding, is stationary, in particular connected to the stator of the synchronous machine,
**characterised in that**
a sensor (S) for detecting the current flowing through the coil windings and a sensor (S) for detecting the rotor temperature are/is disposed on the rotor,
a regulating unit to which the sensor signals are fed being disposed on the rotor, and which by means of power switches of an active rectifier disposed on the rotor regulates the current flowing through the coil windings to a setpoint value,
for the resonant transmission of the energy across the air gap of the rotary transmitter such a capacitor being connected in series or in parallel to the secondary winding that the associated resonant frequency substantially corresponds to the frequency of the current injected into the primary winding,
- the active rectifier being connected to the secondary winding for the supply of the coil winding with unipolar current, especially direct current, or for the supply of the coil winding with an alternating current having a temporal average value that does not vanish, in particular the average value being formed across a time period of the alternating current,
the synchronous machine including a stator winding and the rotor on which the coil windings are disposed in the circumferential direction and energised such that radially oriented magnetic fields are able to be generated, which have an alternate orientation in the circumferential direction.

2. Synchronous machine according to claim 1,
**characterised in that**
means for the demodulation and modulation of additional signal current components, especially of current components having a higher frequency, are provided, in particular on the rotor, such that thus information is transmittable also bidirectionally via the inductive rotary transmitter.

3. Synchronous machine according to at least one of the preceding claims,
**characterised in that**
the rotor of the synchronous machine and the driven and/or driving, rotatably supported parts connected to the rotor have a sensor (S), in particular such that the torque is able to be varied more rapidly than the rotational speed, especially at a rate of change that is at least ten times faster.

## Revendications

1. Machine électrique synchrone à excitation extérieure
dans laquelle des bobinages sont disposés sur le rotor, notamment en tant que bobines excitatrices,
et l'alimentation électrique desdits bobinages est assurée au moyen d'un transformateur tournant inductif dont l'enroulement secondaire est connecté audit rotor et dont l'enroulement primaire, couplé inductivement audit enroulement secondaire, occupe une position stationnaire et est raccordé, en particulier, au stator de ladite machine synchrone,
**caractérisée par le fait**
**qu'**un capteur (S) conçu pour détecter le courant circulant dans les bobinages, et un capteur (S) conçu pour détecter la température du rotor, sont disposés sur ledit rotor, sachant qu'une unité de régulation, à laquelle les signaux desdits capteurs sont délivrés, est disposée sur le rotor et régule sur une valeur de consigne, au moyen de commutateurs de puissance d'un redresseur actif disposés sur ledit rotor, le courant circulant dans lesdits bobinages,
sachant qu'un condensateur est branché en série ou en parallèle avec l'enroulement secondaire, en vue du transfert de l'énergie par résonance via l'entrefer du transformateur tournant, de façon telle que la fréquence de résonance associée corresponde, pour l'essentiel, à la fréquence du courant injecté dans l'enroulement primaire,
- ledit redresseur actif étant connecté audit enroulement secondaire en vue de l'alimentation du bobinage en courant unipolaire, notamment en courant continu, ou en vue de l'alimentation dudit bobinage par un courant alternatif dont la valeur moyenne temporelle ne disparaît pas, laquelle valeur moyenne est formée, en particulier, sur la base d'une période temporelle dudit courant alternatif,
ladite machine synchrone comprenant un enroulement statorique et le rotor sur lequel les bobinages sont agencés dans le sens périphérique, et alimentés en courant, de manière à permettre la génération de champs magnétiques à orientation radiale, orientés en alternance dans le sens périphérique.

2. Machine synchrone selon la revendication 1,
**caractérisée par le fait que**
des moyens sont prévus, sur le rotor en particulier, pour la démodulation et la modulation de composantes additionnelles de courant des signaux, notamment des composantes de courant à fréquence plus élevée, de telle sorte que des informations puissent également être transmises en mode bidirectionnel, par l'intermédiaire du transformateur tournant inductif.

3. Machine synchrone selon au moins l'une des revendications précédentes,
**caractérisée par le fait que**
le rotor de ladite machine synchrone, et les parties montées à rotation qui sont reliées à ce dernier et sont entraînées et/ou opèrent un entraînement, sont notamment dotés d'un capteur (S) de façon telle que le couple de rotation puisse être modifié plus rapidement que la vitesse de rotation moyennant au moins, en particulier, une vitesse de modification dix fois supérieure.
